# EUROPÄISCHE PATENTSCHRIFT

(11) **EP 3 471 980 B1**
(45) Veröffentlichungstag und Bekanntmachung des Hinweises auf die Patenterteilung: **27.07.2022**
(21) Anmeldenummer: 17730145.4
(22) Anmeldetag: 14.06.2017
(51) Int. Cl.: B60H 1/34, B60H 1/00

(54) **ANORDNUNG ZUR EINSTELLUNG EINER LAMELLE EINES LUFTAUSSTRÖMERS FÜR EIN FORTBEWEGUNGSMITTEL**
ARRANGEMENT FOR ADJUSTING A SLAT OF AN AIR VENT FOR A MEANS OF TRANSPORTATION
DISPOSITIF DE RÉGLAGE D'UNE LAMELLE D'UN AÉRATEUR D'UN MOYEN DE TRANSPORT

(30) Priorität: 15.06.2016 DE 102016210623
(43) Veröffentlichungstag der Anmeldung: 24.04.2019
(73) Patentinhaber: Bayerische Motoren Werke Aktiengesellschaft, 80809 München (DE)
(72) Erfinder: MIEDL, Florian, 80803 München (DE); FRANCKE, Stefan, 82194 Gröbenzell (DE); TILLE, Thomas, 81249 Muenchen (DE)
(86) Internationale Anmeldenummer: PCT/EP2017/064540
(87) Internationale Veröffentlichungsnummer: WO 2017/216222

(56) Entgegenhaltungen:
- DE-A1- 10 121 909
- DE-A1-102011 000 924
- DE-A1-102012 021 519
- DE-B3-102010 016 377
- DE-B4- 10 121 909
- DE-U1-202010 013 073

## Beschreibung

Die vorliegende Erfindung betrifft ein Fortbewegungsmittel sowie eine Anordnung zur Einstellung einer Lamelle eines Luftausströmers für ein Fortbewegungsmittel zur Ausrichtung eines Luftstromes. Insbesondere betrifft die vorliegende Erfindung eine bequeme und anwenderfreundliche sowie exakte Einstellungsmöglichkeit für die Ausrichtung des Luftstromes.

Luftausströmer in Fortbewegungsmitteln dienen der Ausrichtung und mitunter auch einer Regulierung eines Luftdurchsatzes von Luftströmungen, welche beispielsweise mittels einer Luftpumpe einer Heiz-/Klimaanlage erzeugt werden. Lamellen sorgen hierbei für eine wunschgemäße Ausrichtung des den Luftausströmer verlassenden Luftstromes. Im Stand der Technik werden diese häufig über Kipp-/Schiebeelemente simultan ausgerichtet. Diese haben jedoch den Nachteil, dass eine optische Kontrolle der vorgenommenen Änderung vergleichsweise schlecht zu erfassen ist. Überdies ist eine Feineinstellung insbesondere während der Wahrnehmung einer Fahraufgabe durch den Anwender geschicklichkeitsbedürftig. Insbesondere infolge von Alterungsprozessen und Verunreinigungen kann die Justage der relativ zueinander bewegten Elemente erschwert werden.

DE 10 2012 020 539 A1 offenbart einen Ausströmer für eine Klimaanlage, welche eine im Luftstrom angeordnete Bedienungs- und Anzeigeeinheit zur Ansteuerung einer Heiz-/Klimaanlage aufweist. Konkret wird vorgeschlagen, Gebläsestufen und Lufttemperaturen mittels eines Drehdrückstellers anzupassen.

DE 20 2010 013 073 U1 zeigt ein Bedienelement für die Steuerung einer Richtung eines Luftstroms. Diese umfasst einen Bedienknopf und ein diesen umgebendes ringförmiges Bedienrad oder einen Schwenkhebel zum Einstellen mindestens der Größe eines Luftstroms. Der Bedienknopf selbst ist zum Steuern der Richtung des Luftstroms eingerichtet.

DE 101 21 909 A1 offenbart eine Belüftungsvorrichtung für Fahrzeuge, bei welcher eine Detektion einer Ausrichtung der verwendeten Luftführungsmittel und eine Anzeige der Ausrichtung des Luftstroms durch eine Anzeigeeinrichtung ausgegeben wird.

DE 10 2012 021 519 A1 offenbart ein Lüftungssystem für ein Kraftfahrzeug sowie ein Verfahren zum Einstellen einer Belüftung. Auf einer Anzeige- und Bedieneinheit wird ein anzuströmender Anströmbereich in dem Innenraum des Fortbewegungsmittels ausgewählt und elektromotorisch ein Luftausströmer derart angesteuert, dass der Anströmbereich vom Luftstrom des Lüftungssystems angeströmt wird.

DE 10 2010 016 377 B3 offenbart eine Luftdüse mit einer zentral im Luftkanal angeordneten Anzeigeeinheit. Die Anzeigeeinheit ist eingerichtet, die Temperatur des Luftstroms anzuzeigen.

DE 10 2011 000 924 A1 offenbart eine Anordnung einer Anzeige-Eingabeeinheit in einem Fahrzeug, welche entlang einer länglichen Erstreckung an einer Luftausströmvorrichtung des Fortbewegungsmittels beweglich geführt ist.

Für die Nachteile des Standes der Technik sind bislang keine Lösungen bekannt. Es ist eine Aufgabe der vorliegenden Erfindung, den vorstehend identifizierten Bedarf zu stillen.

Die vorstehend genannte Aufgabe wird erfindungsgemäß durch eine Anordnung zur Einstellung einer Lamelle eines Luftausströmers für ein Fortbewegungsmittel zur Ausrichtung eines ersten Luftstroms gemäß Anspruch 1 gelöst. Die Anordnung umfasst eine Anzeigeeinrichtung, welche als Bildschirm, insbesondere als Touch-Screen, ausgestaltet ist. Eine Betätigungseinrichtung ist vorgesehen, Anwendereingaben entgegenzunehmen und in Steuerbefehle umzuwandeln. Eine Auswerteeinheit, welche als programmierbarer Prozessor, elektronisches Steuergerät o.ä. ausgestaltet sein kann, ist eingerichtet, im Ansprechen auf das Steuersignal einen Aktuator zur Einstellung der Lamelle anzusteuern. Die Anzeigeeinrichtung ist in etwa in der Mitte des Luftkanalquerschnittes des Luftausströmers angeordnet und eingerichtet, eine der geänderten Stellung der Lamelle entsprechende Anzeige darzustellen. Es wird also eine motorische Verstellung einer Lamelle, beispielsweise eines Winkels der Lamelle, vorgeschlagen, woraufhin eine optische Ausgabe erfolgt, welche die erfolgreiche Verstellung der Lamelle quittiert. Selbstverständlich kann die Anzeigeeinrichtung weitergehende Informationen über die geänderte Stellung ausgeben. Insbesondere kann eine Richtung (z.B. in Form einer Pfeildarstellung) durch die Anzeigeeinrichtung ausgegeben werden, welche der Luftstrom nun in etwa hat. Beispielsweise für den Fall, dass die Anwendereingabe eine kontinuierliche Positionierung ("gedrückt Halten" oder "verschoben Halten") der Betätigungseinrichtung bewirkt und im Ansprechen darauf ein ebenfalls kontinuierliches Ändern der Stellung der Lamelle erfolgt, kann vermieden werden, dass kontinuierliche Bewegungen des Anwenders bzw. seines Eingabemittels (z.B. Finger/Hand) erforderlich sind, welche mitunter aufgrund von Verschleißerscheinungen nur mit variierender haptischer Rückmeldung (z.B. Klemmen, Rasten o.ä.) durch Anwenderschnittstellen geführt werden.

Die Unteransprüche zeigen bevorzugte Weiterbildungen der Erfindung.

Die vorgenannten Elemente der erfindungsgemäßen Anordnung können anteilig oder sämtlich in einem Kanal des Luftausströmers angeordnet werden. Die vorgenannten Elemente der erfindungsgemäßen Anordnung können in einem gemeinsamen Gehäuse angeordnet sein, welches an seiner Außenseite einerseits die Anzeigeeinrichtung und andererseits elektrische Leitungen zur Energieaufnahme aufweist. Auf diese Weise ergibt sich eine kompakte Baueinheit, welche platzsparend in Luftstromkanäle (z.B. eines Armaturenbrettes, einer Mittelkonsole o.ä.) integriert und dort angeschlossen werden kann.

Eine besonders intuitive Bedienung ergibt sich für den Anwender, wenn die erfindungsgemäße Anordnung in etwa in der Mitte des Luftkanalquerschnittes des Luftausströmers angeordnet wird, wo der Anwender gemäß dem Stand der Technik den Kipp-/Schieberegler zur manuellen bzw. nicht-motorisch unterstützten Einflussnahme auf die Luftstromrichtung erwartet. An einer solchen Position kann die erfindungsgemäße Anordnung beispielsweise durch diejenigen Strukturen gehalten werden, welche zur Aufhängung der Lamellen dienen. Alternativ oder zusätzlich kann eine separate Aufhängung innerhalb des Luftausströmers die erfindungsgemäße Anordnung haltern.

Die Betätigungseinrichtung kann ein Federelement aufweisen, welches für eine Rückstellung der Betätigungseinrichtung nach der Anwendereingabe sorgt. Lenkt der Anwender die Betätigungseinrichtung in eine solche Richtung aus, in welche er den Luftstrom umzulenken wünscht, erfolgt eine kontinuierliche oder inkrementelle Änderung der Ausrichtung der Lamelle. Eine inkrementelle Änderung der Ausrichtung der Lamelle kann insbesondere für den Fall erfolgen, dass der Anwender wiederholt eine Betätigung in eine identische Richtung vornimmt. Das Federelement führt den durch den Anwender bewegten Komplex der Betätigungseinrichtung in seine Ursprungsstellung zurück.

Um die Ablesbarkeit der Anzeigeeinrichtung während der Betätigung bestmöglich zu gewährleisten, kann vorgesehen sein, die Betätigungseinrichtung mit Freiheitsgraden vorzusehen, welche im Wesentlichen senkrecht zu einer Anzeige auf der Anzeigeeinrichtung orientiert sind. Mit andere Worten kann die Betätigungseinrichtung durch den Anwender in vier Richtungen (oben, unten, links, rechts), bevorzugt acht Richtungen (die vier vorgenannten Richtungen sowie orthogonale Kombinationen derselben), äußerst bevorzugt in sämtliche Richtungen, welche im Wesentlichen in der Ebene des Armaturenbrettes liegen, bewegt werden und informationstechnisch auflösen. Auf diese Weise ergibt sich eine besonders intuitive, komfortable und sichere Bedienung auch bei unebener Fahrbahn.

Der Aktuator kann beispielsweise einen ersten elektrischen Motor aufweisen, welcher mit einem Teil der Lamellen des Luftausströmers mechanisch wirkverbunden ist. Die Ansteuerung des elektrischen Motors wird somit zu einer Verschwenkung der ersten Lamelle. Ein zweiter elektrischer Motor kann vorgesehen sein, eine zweite Lamelle mechanisch hinsichtlich ihrer Ausrichtung zu beeinflussen. Der erste elektrische Motor kann identisch dem zweiten elektrischen Motor sein, bzw. ein einziger Motor kann als erster und zweiter Motor vorgesehen sein. Die erste Lamelle und die zweite Lamelle können bevorzugt im Wesentlichen senkrecht zueinander im Luftausströmer angeordnet sein. Insbesondere sind ihre Schwenkachsen senkrecht zueinander ausgerichtet, um größtmögliche Freiheiten bezüglich der möglichen Luftstromrichtungen zu erzielen.

Kegelzahnräder können vorgesehen sein, die Drehbewegungen des elektrischen Motors in ein Moment parallel zur jeweiligen Schwenkachse der Lamellen umzusetzen. Hierbei sind die Abrollflächen der Kegelzahnräder beispielsweise in einem 45°-Winkel zur Welle des jeweiligen elektrischen Motors orientiert. Die Betätigungsvorrichtung kann durch eine berührungsempfindliche (z.B. kapazitive) Oberfläche ergänzt werden, welche auf der Anordnung vorgesehen ist. Hierbei kann die berührungsempfindliche Oberfläche eine oberste, dem Anwender zugewandte Oberfläche der Anordnung darstellen. Sie kann insbesondere transparent ausgeführt sein, um die Sicht des Anwenders auf die Anzeigeeinrichtung nicht wesentlich zu behindern. Über die berührungsempfindliche Oberfläche können die oben genannten Einflussnahmen auf die Lamellenstellungen und alternativ oder zusätzlich Einflussnahmen auf die Arbeitsweise der Luftpumpe der zugeordneten Heiz-/Klimaanlage und/oder Einfluss auf die Temperatur des Luftstroms genommen werden. Sämtliche Einflussnahmen auf Temperatur, Strömungsgeschwindigkeit und Richtung des den Luftausströmer verlassenen Luftstroms können kumulativ oder alternativ den Elementen der Betätigungseinrichtung zugeordnet werden. Mit anderen Worten können insbesondere die Temperatur- und Luftstromgeschwindigkeit durch die berührungsempfindliche Oberfläche an die Heiz-/Klimaanlage des Fortbewegungsmittels gesendet werden, während die mechanischen Betätigungen unter Verformung des Federelementes der Ausrichtung der Lamellen zugeordnet werden können. Dies ermöglicht eine intuitive und logische Bedienung und Informationsverarbeitung der erfindungsgemäßen Anordnung.

Insbesondere für den Fall, dass die erfindungsgemäße Anordnung zur Einflussnahme auf Luftstromgeschwindigkeit und Temperatur eingerichtet ist, können sich die erzeugten Steuerbefehle auf eine Vielzahl von Luftströmen, welche aus unterschiedlichen Luftausströmern des Fortbewegungsmittels austreten, beziehen oder bevorzugt auf lediglich diejenige Luftstromgeschwindigkeit und -temperatur, welche der Luftstrom des vorliegenden Luftausströmers aufweist.

Auch die Anpassungen von Lufttemperatur und -strömungsgeschwindigkeit können über eine korrespondierende Anzeigeänderung auf der Anzeigeeinrichtung dargestellt werden.

Insbesondere für den Fall, dass mehrere Luftausströmer für ein und denselben Anwender vorgesehen sind, kann eine Vernetzung derselben (z.B. über ein BusSystem o.ä.) vorteilhaft sein, um überflüssige Bedienschritte zu erübrigen. Hierzu kann die Auswerteeinheit eingerichtet sein, im Ansprechen auf das Steuersignal einen Aktuator einer zweiten Anordnung anzusteuern, wobei die zweite Anordnung insbesondere entsprechend der ersten Anordnung ausgestaltet und informationstechnisch mit dieser verbunden sein kann. Auf Grundlage des Steuersignals wird bevorzugt also auch eine Lamelle eines der zweiten Anordnung zugeordneten zweiten Luftausströmers angesteuert, um die Ausrichtung des Luftstroms des zweiten Luftausströmers zu beeinflussen. Es ergeben sich unterschiedliche Anwendungsfälle, welche je nach Situation und Anwenderwunsch zu unterschiedlichen Richtungsänderungen führen können. Wünscht der Anwender beispielsweise eine möglichst hohe Luftbewegung in eine Richtung abseits der beiden Luftausströmer, kann es vorteilhaft sein, dass beide Luftströme in eine identische Richtung gerichtet werden. Beispielsweise kann also das Steuersignal den jeweiligen Aktuator veranlassen, den Luftstrom eines jeden Luftausströmers "nach rechts" bzw. "nach links" bzw. "nach oben" bzw. "nach unten" zu richten. Insbesondere für den Fall, dass die anzuströmende Position zwischen zwei Luftausströmern liegt, kann jedoch vorgesehen werden, dass das Steuersignal den jeweiligen Aktuator derart ansteuert, dass der jeweilige Luftstrom der beiden Luftausströmer auf ein und dieselbe Position gerichtet wird. Dies kann voneinander unterschiedliche Richtungsänderungen der Lamellen, beispielsweise in einander entgegengesetzte Richtungen, erfordern. Beispielsweise kann eine von mehreren Luftausströmern anzuströmende Position über eine berührungsempfindliche Oberfläche als Bestandteil der Betätigungseinrichtung definiert werden, sofern auf der berührungsempfindlichen Oberfläche eine Innenraumposition vordefinierbar ist. Beispielsweise kann eine Repräsentation eines Fahrerarbeitsplatzes (eine schematische Darstellung eines Sitzes bzw. Körperregionen eines Anwenders) verwendet werden, deren Abschnitte bei Berührung die anzuströmende Position definieren. Dies kann unnötige Bedienschritte, insbesondere in Verbindung mit einer Vielzahl von Luftausströmern erübrigen.

Gemäß einem zweiten Aspekt der vorliegenden Erfindung wird ein Fortbewegungsmittel gemäß Anspruch 10 vorgeschlagen, welches eine Anordnung gemäß dem erstgenannten Erfindungsaspekt aufweist. Das Fortbewegungsmittel kann beispielsweise als PKW, Transporter, LKW, Luft- und/oder Wasserfahrzeug ausgestaltet sein. Die Merkmale, Merkmalskombinationen und die sich aus diesen ergebenden Vorteile entsprechen den in Verbindung mit dem erstgenannten Erfindungsaspekt ausgeführten derart ersichtlich, dass zur Vermeidung von Wiederholungen auf die obigen Ausführungen verwiesen wird.

Weitere Einzelheiten, Merkmale und Vorteile der Erfindung ergeben sich aus der nachfolgenden Beschreibung und den Figuren. Es zeigen:
- Figur 1: eine schematische Ansicht eines Fahrerarbeitsplatzes mit mehreren Luftausströmern gemäß dem Stand der Technik;
- Figur 2: eine Explosionsdarstellung einer Betätigungseinrichtung eines Ausführungsbeispiels einer erfindungsgemäßen Anordnung;
- Figur 3: eine perspektivische Ansicht eines Ausführungsbeispiels eines erfindungsgemäß ausgestalteten Luftausströmers; und
- Figur 4: eine teilweise geschnittene perspektivische Darstellung eines Ausführungsbeispiels einer erfindungsgemäßen Anordnung.

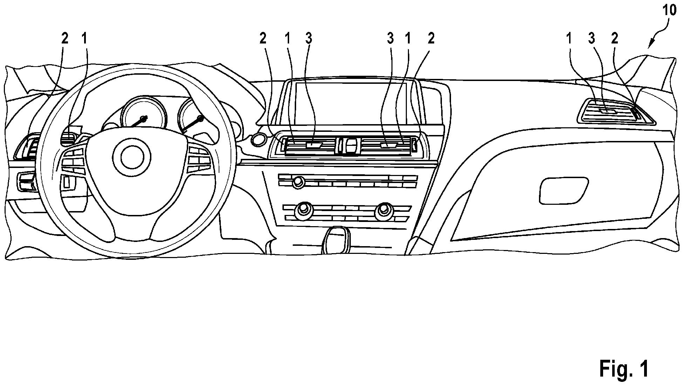

Figur 1 zeigt das Armaturenbrett / den Fahrerarbeitsplatz eines PKWs 10 als Fortbewegungsmittel, welcher über vier Luftausströmer 1 auf Rumpfhöhe des Anwenders verfügt. Etwa an derjenigen Position, an welcher die erfindungsgemäße Anordnung vorgesehen ist, sind gemäß dem Stand der Technik Kipp-/Schiebeelemente 3 zur Einflussnahme auf horizontale und (nicht dargestellte) vertikale Lamellen vorgesehen. Ein Stellrad 2 ist einem jeden Luftausströmer 1 zugeordnet, mittels dessen eine Klappenstellung beeinflusst werden kann, durch welche die Luftfördermenge des jeweiligen Luftausströmers beeinflusst werden kann, indem sein Strömungswiderstand durch Veränderung eines freien Kanalquerschnittes erhöht wird. Die Mechanik der Kipp-/Schieberegler 3 kann insbesondere durch Alterungsprozesse eine ungeeignete Reibkraft/Weg-Charakteristik entwickeln.

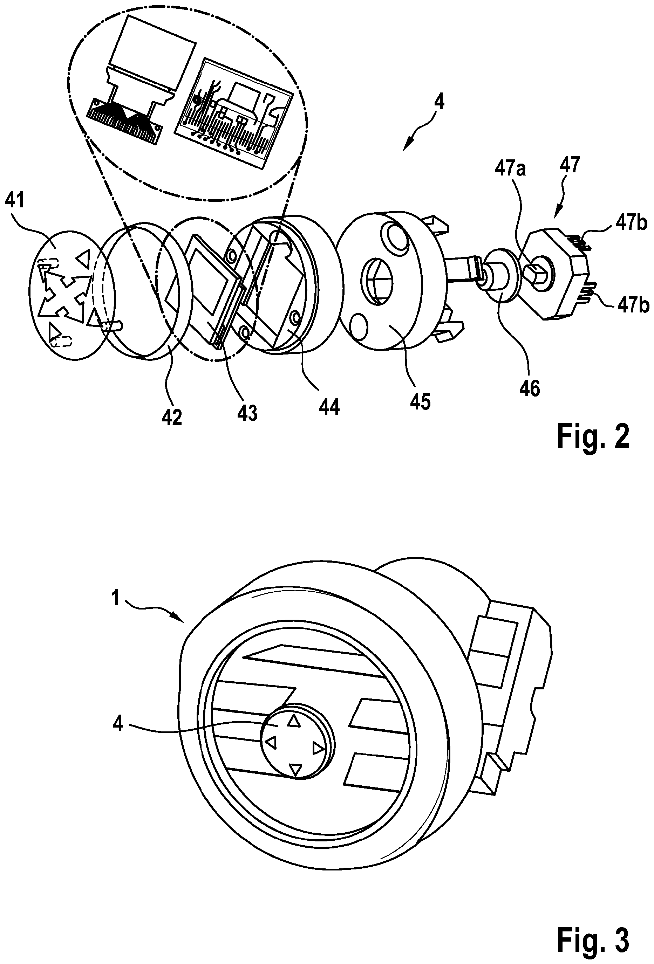

Figur 2 zeigt eine Explosionsdarstellung einer erfindungsgemäßen Betätigungseinrichtung 4, welche eine dem Anwender zugewandte transparente Abdeckung 41 mit einer berührungsempfindlichen Oberfläche aufweist. Eine kreisrunde Begrenzungsfläche korrespondiert mit einer inneren Fläche eines Zierrings 42, über welchen der Anwender Zug/Schubkräfte normal zur Strömungsrichtung des Luftausströmers auf die Betätigungseinrichtung 4 aufbringen kann. Hinter der Abdeckung 41 bzw. dem Zierring 42 ist eine Anzeigeeinrichtung 43 in Form eines kleinen Bildschirms/Displays (sog. "Wise Chip") vorgesehen. Die Anzeigeeinrichtung 43 korrespondiert mit einer Ausnehmung, welche wiederum mit einer Aufnahme 44 für die Anzeigeeinrichtung 43 korrespondiert. Die Aufnahme 44 sorgt für eine toleranzminimierte Positionierung der Anzeigeeinrichtung 43 und begünstigt deren elektrische und informationstechnische Anbindung an das Fahrzeugbordnetz sowie an die berührungsempfindliche Oberfläche der Abdeckung 41. Hinter der Aufnahme 44 ist ein Analogpad-Gehäuse 45 angeordnet, in welches eine Axialfixierung 46 derart eingesetzt werden kann, dass eine Verschiebung des Analogpad-Gehäuses 45 in eine senkrecht auf der Öffnungsfläche des Luftausströmers stehende Bewegung der Aufnahme 44 die Axialfixierung 46 mitnimmt und so auch einen Pin 47a gegenüber den übrigen Bestandteilen eines Analogpads 47 als Auswerteeinheit mitnimmt. Die Relativbewegung zwischen dem Pin 47a und dem übrigen Bestandteil des Analogpads 47 wird in Form elektrischer Signal über rückseitige elektrische Anschlüsse 47b an (in Figur 2 nicht dargestellte) Aktuatoren weitergeleitet bzw. in eine Leistungsansteuerung der Aktuatoren umgewandelt. Die dargestellte Abdeckung 41 kann aus einem Zwei-Komponenten-Werkstoff gefertigt werden. Ihre Oberfläche kann geschliffen, poliert und klarlackiert sein. Auch der Zierring 42 kann eine verfahrenstechnisch veredelte Oberfläche aufweisen, z.B. metallbeschichtet, geschliffen und poliert sein. Der Durchmesser der Aufnahme 44 kann in einem Bereich zwischen 20 und 50 mm, bevorzugt zwischen 30 und 40 mm, betragen. Die vorgenannten Maße ermöglichen einerseits eine leicht erfassbare Darstellung auf der Anzeigeeinrichtung 43, andererseits einen hinreichend großen freien Öffnungsquerschnitt zwischen der dargestellten Betätigungseinrichtung und einer den Luftausströmer umgebenden Blende. Das Analogpad kann beispielsweise zwei, vier, acht oder mehr unterschiedliche Bewegungsrichtungen der Axialfixierung auflösen.

Figur 3 zeigt eine perspektivische Darstellung eines Luftausströmers 1 mit einer Betätigungseinrichtung 4 gemäß Figur 2. Die Betätigungseinrichtung 4 ist in etwa in der Mitte des Strömungskanals angeordnet und weist vier optische Markierungen nach Art einer Pfeilspitze auf. Die optischen Markierungen umgeben ein (nicht dargestelltes) Display, welches im Betriebszustand zusätzliche Informationen zu Temperatur, Strömungsgeschwindigkeit/Lüfterstufe und Strömungsrichtung sowie Schaltfläche zur Einflussnahme auf die vorgenannten Eigenschaften durch den Anwender anzeigt.

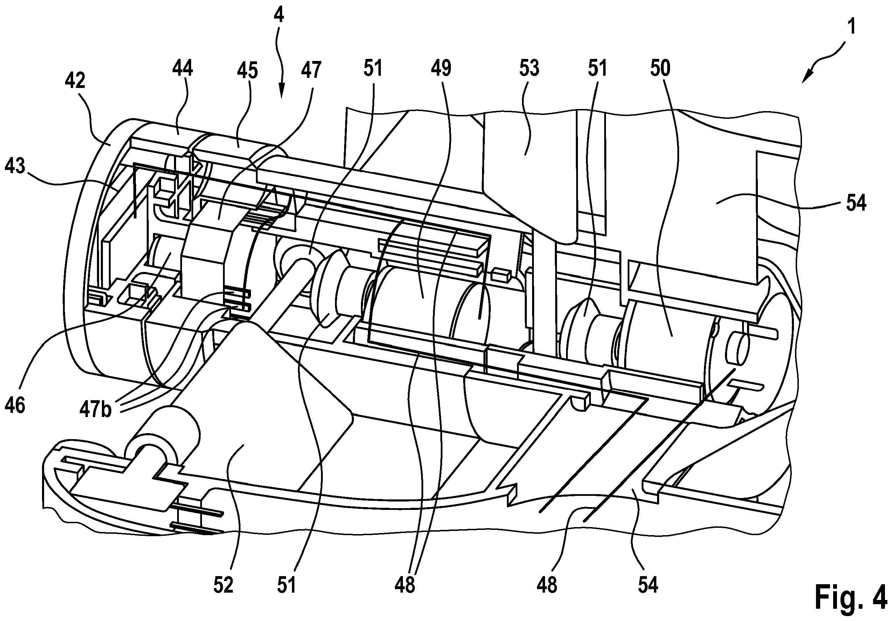

Figur 4 zeigt eine teilweise geschnittene perspektivische Ansicht der in Figur 3 dargestellten Anordnung. Die in Verbindung mit Figur 2 bzw. Figur 3 dargestellten und diskutierten Elemente tragen dieselben Bezugszeichen, so dass auf eine wiederholte Erläuterung verzichtet werden kann. Energie- und Steuerleitungen 48 verbinden zwei elektrische Motoren 49, 50 als Aktuatoren mit den elektrischen Anschlüssen 47b des Analogpads 47 und der Anzeigeeinrichtung 43. Die beiden Elektromotoren 49, 50 sind bezüglich ihrer Wellen parallel zur Strömungsrichtung des die Betätigungseinrichtung 4 umströmenden Fluides angeordnet. Kegelzahnräder 51 ermöglichen eine Umsetzung des jeweils erzeugten Drehmomentes auf Lamellen 52, 53, welche um eine horizontale bzw. vertikale Achse (jeweils normal zur Strömungsrichtung angeordnet) geschwenkt werden können. Hierbei ist der erste Elektromotor 49 zwischen den um eine horizontale Achse schwenkbaren Lamellen 52 und den um eine vertikale Achse schwenkbaren Lamellen 53 angeordnet. Der zweite Elektromotor 50 ist stromaufwärts der um eine vertikale Achse schwenkbaren Lamellen 53 angeordnet. Die beiden Elektromotoren 49, 50 sind hierbei koaxial, in Strömungsrichtung also exakt hintereinander angeordnet. Finnen 54 verbinden die Betätigungseinrichtung 4 mit außerhalb des Strömungskanals liegenden Strukturen. Die Leitungen 48 werden in der hohlen horizontalen Finne 54 aus der Betätigungseinrichtung 4 herausgeführt. Eine elektrische und informationstechnische Anbindung an das Fahrzeugbordnetz ist der Anschaulichkeit halber nicht dargestellt, kann jedoch bevorzugt auch durch eine mit Flauschband umwickelte Informationsleitung innerhalb des Strömungskanals (zumindest anteilig) erfolgen.

### Bezugszeichenliste:

- 1: Luftausströmer
- 2: Stellrad
- 3: Kipp-/Schiebeelemente
- 4: Betätigungseinrichtung
- 10: PKW
- 41: Abdeckung
- 42: Zierring
- 43: Anzeigeeinrichtung
- 44: Halterung
- 45: Analogpad-Gehäuse
- 46: Axialfixierung
- 47: Analogpad
- 47a: Pin
- 47b: elektrische Anschlüsse
- 48: Leitungen
- 49, 50: Elektromotor
- 51: Kegelzahnrad
- 52, 53: Lamellen
- 54: Finnen

## Patentansprüche

1. Anordnung zur Einstellung einer Lamelle (52, 53) eines Luftausströmers (1) für ein Fortbewegungsmittel (10) zur Ausrichtung eines ersten Luftstromes umfassend
- eine Anzeigeeinrichtung (43),
- eine Betätigungseinrichtung (4) und
- eine Auswerteeinheit (47),
wobei
- die Betätigungseinrichtung (4) eingerichtet ist, im Ansprechen auf eine Betätigung durch den Anwender ein Steuersignal an die Auswerteeinheit (47) auszugeben,
- die Auswerteeinheit (47) eingerichtet ist, im Ansprechen auf das Steuersignal einen Aktuator (49, 50) zur Einstellung der Lamelle (52, 53) anzusteuern,
**dadurch gekennzeichnet, dass**
- die Anzeigeeinrichtung (43) als Bildschirm ausgestaltet und eingerichtet ist, in der Mitte des Luftkanalquerschnittes des Luftausströmers (1) angeordnet zu werden und eine der geänderten Stellung der Lamelle (52, 53) entsprechende Anzeige darzustellen.

2. Anordnung nach Anspruch 1, wobei die Anordnung eingerichtet ist, im Luftausströmer (1) angeordnet zu werden.

3. Anordnung nach Anspruch 1 oder 2, wobei die Anordnung eingerichtet ist, in einer Luftaustrittsöffnung des Luftausströmers (1) angeordnet zu werden.

4. Anordnung nach einem der vorstehenden Ansprüche, wobei die Betätigungseinrichtung (4) ein Federelement aufweist, welches eingerichtet ist, eine im Wesentlichen senkrecht zu der Anzeige auf der Anzeigeeinrichtung (43) orientierte Kraft zur automatischen Rückstellung der Betätigungseinrichtung (4) zu erzeugen.

5. Anordnung nach einem der vorstehenden Ansprüche, weiter umfassend einen Aktuator, wobei der Aktuator (49, 50)
- einen ersten elektrischen Motor und
- einen zweiten elektrischen Motor aufweist, wobei
- der erste elektrische Motor insbesondere mit einem ersten Kegelzahnrad (51) mechanisch wirkverbunden ist, mittels dessen eine erste Lamelle (53) um eine vertikale Achse geschwenkt werden kann und
- der zweite elektrische Motor insbesondere mit einem zweiten Kegelzahnrad (51) mechanisch wirkverbunden ist, mittels dessen eine zweite Lamelle (52) um eine horizontale Achse geschwenkt werden kann.

6. Anordnung nach einem der vorstehenden Ansprüche, wobei die Betätigungseinrichtung (4) eine berührungsempfindliche, insbesondere kapazitive, Oberfläche (41) aufweist, welche auf der Anzeigeeinrichtung (43) angeordnet ist.

7. Anordnung nach einem der vorstehenden Ansprüche, wobei die Anzeigeeinrichtung (43) eingerichtet ist, gemeinsam mit der Betätigungseinrichtung (4) durch eine Betätigung durch den Anwender bewegt zu werden.

8. Anordnung nach einem der vorstehenden Ansprüche, wobei
- die Auswerteeinheit (47) eingerichtet ist, im Ansprechen auf das Steuersignal eine Temperaturänderung des durch den Luftausströmer (1) abzugebenden ersten Luftstromes zu veranlassen und
- die Anzeigeeinrichtung (43) eingerichtet ist, eine der Temperaturänderung entsprechende Anzeige darzustellen.

9. Anordnung nach einem der vorstehenden Ansprüche, wobei
- die Auswerteeinheit (47) eingerichtet ist, im Ansprechen auf das Steuersignal einen Aktuator (49, 50) einer zweiten, insbesondere nach einem der vorstehenden Ansprüche ausgeführten, Anordnung anzusteuern, um eine Lamelle (52, 53) eines der zweiten Anordnung zugeordneten zweiten Luftausströmers (1) derart anzusteuern, dass ein diesen durchströmender zweiter Luftstrom
- auf einen Punkt gerichtet wird, auf welchen auch der erste Luftstrom gerichtet ist, oder
- eine identische Richtungsänderung oder
- eine entgegengesetzte Richtungsänderung erfährt.

10. Fortbewegungsmittel umfassend eine Anordnung nach einem der vorstehenden Ansprüche.

## Claims

1. Arrangement for adjusting a slat (52, 53) of an air vent (1) for a means of transportation (10) for orienting a first air flow, comprising
- a display device (43),
- an actuating device (4), and
- an evaluation unit (47),
wherein
- the actuating device (4) is configured to output a control signal to the evaluation unit (47) in response to an actuation by the user,
- the evaluation unit (47) is configured so as, in response to the control signal, to activate an actuator (49, 50) for adjusting the slat (52, 53), **characterized in that**
- the display device (43) is designed as a screen and is configured to be arranged in the centre of the air duct cross section of the air vent (1) and to depict a display corresponding to the changed position of the slat (52, 53).

2. Arrangement according to Claim 1, wherein the arrangement is configured to be arranged in the air vent (1) .

3. Arrangement according to Claim 1 or 2, wherein the arrangement is configured to be arranged in an air outlet opening of the air vent (1).

4. Arrangement according to one of the preceding claims, wherein the actuating device (4) has a spring element which is configured to produce a force, which is oriented substantially perpendicularly to the display on the display device (43), for the automatic resetting of the actuating device (4).

5. Arrangement according to one of the preceding claims, furthermore comprising an actuator, wherein the actuator (49, 50) has
- a first electric motor and
- a second electric motor, wherein
- the first electric motor is mechanically operatively connected in particular to a first bevel gear (51) by means of which a first slat (53) can be pivoted about a vertical axis, and
- the second electric motor is mechanically operatively connected in particular to a second bevel gear (51) by means of which a second slat (52) can be pivoted about a horizontal axis.

6. Arrangement according to one of the preceding claims, wherein the actuating device (4) has a touch-sensitive, in particular capacitive, surface (41) which is arranged on the display device (43).

7. Arrangement according to one of the preceding claims, wherein the display device (43) is configured to be moved jointly with the actuating device (4) by means of an actuation by the user.

8. Arrangement according to one of the preceding claims, wherein
- the evaluation unit (47) is configured so as, in response to the control signal, to trigger a change in temperature of the first air flow to be dispensed by the air vent (1), and
- the display device (43) is configured to depict a display corresponding to the change in temperature.

9. Arrangement according to one of the preceding claims, wherein
- the evaluation unit (47) is configured so as, in response to the control signal, to activate an actuator (49, 50) of a second arrangement, designed in particular according to one of the preceding claims, in order to activate a slat (52, 53) of a second air vent (1), which is assigned to the second arrangement, in such a manner that a second air flow flowing through said air vent
- is directed onto a point at which the first air flow is also directed, or
- undergoes an identical change in direction or
- an opposite change in direction.

10. Means of transportation comprising an arrangement according to one of the preceding claims.

## Revendications

1. Ensemble de réglage d'une lamelle (52, 53) d'un aérateur (1) d'un moyen de transport (10) servant à l'orientation d'un premier flux d'air, comportant
- un dispositif d'affichage (43),
- un dispositif d'actionnement (4) et
- une unité d'évaluation (47),
dans lequel
- le dispositif d'actionnement (4) est conçu pour délivrer un signal de commande à l'unité d'évaluation (47) en réponse à un actionnement par l'utilisateur,
- l'unité d'évaluation (47) est conçue pour commander un actionneur (49, 50) servant au réglage de la lamelle (52, 53) en réponse au signal de commande, **caractérisé en ce que**
- le dispositif d'affichage (43) est configuré sous forme d'écran et est conçu pour être disposé au centre de la section transversale de canal d'air de l'aérateur (1) et pour représenter une indication correspondant à la position modifiée de la lamelle (52, 53).

2. Ensemble selon la revendication 1, l'ensemble étant conçu pour être disposé dans l'aérateur (1).

3. Ensemble selon la revendication 1 ou 2, l'ensemble étant conçu pour être disposé dans une ouverture de sortie d'air de l'aérateur (1).

4. Ensemble selon l'une des revendications précédentes, le dispositif d'actionnement (4) comprenant un élément ressort, lequel est conçu pour produire une force orientée sensiblement perpendiculairement à l'indication sur le dispositif d'affichage (43) pour le rappel automatique du dispositif d'actionnement (4).

5. Ensemble selon l'une des revendications précédentes, comportant en outre un actionneur, l'actionneur (49, 50)
- comprenant un premier moteur électrique et
- un deuxième moteur électrique,
- le premier moteur électrique étant relié fonctionnellement mécaniquement en particulier à une première roue dentée conique (51) au moyen de laquelle une première lamelle (53) peut être pivotée autour d'un axe vertical et
- le deuxième moteur électrique étant relié fonctionnellement mécaniquement en particulier à une deuxième roue dentée conique (51) au moyen de laquelle une deuxième lamelle (52) peut être pivotée autour d'un axe horizontal.

6. Ensemble selon l'une des revendications précédentes, le dispositif d'actionnement (4) comprenant une surface (41) tactile, en particulier capacitive, laquelle est disposée sur le dispositif d'affichage (43).

7. Ensemble selon l'une des revendications précédentes, le dispositif d'affichage (43) étant conçu pour être déplacé conjointement avec le dispositif d'actionnement (4) grâce à un actionnement par l'utilisateur.

8. Ensemble selon l'une des revendications précédentes,
- l'unité d'évaluation (47) étant conçue pour, en réponse au signal de commande, provoquer un changement de température du premier flux d'air devant être fourni par l'aérateur (1) et
- le dispositif d'affichage (47) étant conçu pour représenter une indication correspondant au changement de température.

9. Ensemble selon l'une des revendications précédentes,
- l'unité d'évaluation (47) étant conçue pour, en réponse au signal de commande, commander un actionneur (49, 50) d'un deuxième ensemble réalisé en particulier selon l'une des revendications précédentes, afin de commander une lamelle (52, 53) d'un deuxième aérateur (1) associé au deuxième ensemble, de telle sorte qu'un deuxième flux d'air s'écoulant à travers celui-ci
- soit orienté vers un point vers lequel le premier flux d'air est également orienté, ou
- subisse un changement de direction identique ou
- un changement de direction opposé.

10. Moyen de transport comportant un ensemble selon l'une des revendications précédentes.
